# EUROPEAN PATENT APPLICATION

(11) **EP 4 541 848 A1**
(43) Date of publication of application: **23.04.2025**
(21) Application number: 23823434.8
(22) Date of filing: 13.01.2023
(51) Int. Cl.: C08L 21/00, B60C 1/00, C08K 5/20, C08L 101/12

(54) **RUBBER COMPOSITION FOR TIRE, AND TIRE**

(30) Priority: 16.06.2022 JP 2022097633
(71) Applicant: BRIDGESTONE CORPORATION, Chuo-ku Tokyo 104-8340 (JP)
(72) Inventor: OGIWARA Akiko, Tokyo 104-8340 (JP); HANZAWA Kentaro, Tokyo 104-8340 (JP)
(74) Representative: Marks & Clerk LLP
(86) International application number: PCT/JP2023/000862
(87) International publication number: WO 2023/243129

(57) **Abstract**

To provide a rubber composition with excellent on-ice performance. To solve the above issue, the present disclosure contains a rubber component, a fatty acid amide, and a liquid polymer with a polystyrene-equivalent weight average molecular weight measured by gel permeation chromatography of 5,000 or more and less than 40,000.

## Description

### TECHNICAL FIELD

The present disclosure relates to a rubber composition for tires and a tire.

### BACKGROUND

When a tire is driven on an icy or snowy road surface, the tire may slip due to the water film formed between the road surface and the tire, which reduces braking performance. Therefore, there is a demand for improved on-ice performance of studless tires, such as effective grip on icy roads, making it easier to brake the vehicle.

As a method to enhance on-ice performance, it is known to increase the surface roughness (surface unevenness) of the tread rubber or to improve flexibility (softness and adhesiveness) at low temperatures.

Increasing the surface roughness is considered to be effective because the depressed portions absorb the water film on the ice, and the protruding portions contact the ice surface, thereby increasing the contact area with the ice surface compared to tread rubber with a smooth surface.

Here, as a method to increase the surface roughness of tread rubber, it is common to incorporate foaming agents or thermally expandable microcapsules into rubber composition for tires (for example, see PTL 1).

### CITATION LIST

### Patent Literature

PTL 1: JP 2020-19862 A

### SUMMARY

### (Technical Problem)

In the method exemplified in PTL 1, while increasing the surface roughness allows the absorption of more water film, the area that can contact the ice surface decreases. Therefore, it can be said that there is a limit to the effect of improving the on-ice performance by increasing surface roughness.

Accordingly, it could be helpful to provide a rubber composition for tires with excellent on-ice performance. It could also be helpful to provide a tire with excellent on-ice performance.

### (Solution to Problem)

The present inventors have conducted extensive research to further improve the on-ice performance. As a result, we have found that by adding a fatty acid amide to a rubber composition for tires, in addition to a liquid polymer with a specific weight average molecular weight, a significant improvement in on-ice performance can be achieved.

That is, a rubber composition for tires of the present disclosure includes a rubber component, a fatty acid amide, and a liquid polymer with a polystyrene-equivalent weight average molecular weight measured by gel permeation chromatography of 5,000 or more and less than 40,000.

With this structure, an excellent on-ice performance can be achieved.

Furthermore, a tire of the present disclosure includes the aforementioned rubber composition used in a tread portion.

With this structure, an excellent on-ice performance can be achieved.

### (Advantageous Effect)

According to the present disclosure, a rubber composition for tires with excellent on-ice performance can be provided. In addition, according to the present disclosure, a tire with excellent on-ice performance can be provided.

### DETAILED DESCRIPTION

Hereinafter, an embodiment of the present disclosure will be described with reference to the drawings as necessary.

### <Rubber composition for tires>

The rubber composition for tires of the present disclosure is a rubber composition containing a rubber component including natural rubber, a fatty acid amide, a hydrocarbyl group-containing cyclic polyol compound, and a liquid polymer with a polystyrene-equivalent weight average molecular weight measured by gel permeation chromatography of 5,000 or more and less than 40,000.

### (Rubber Component)

There are no particular limitations on the rubber component contained in the rubber composition for tires of the present disclosure, but from the viewpoint of wear resistance performance and reinforcing characteristic when the rubber composition for tires is applied to tires, it is preferable to include natural rubber (NR).

Here, there are no particular limitations on the content of the natural rubber in the rubber component. For example, from the viewpoint of further enhancing the wear resistance performance and on-ice performance, it is preferable that the content of the natural rubber is 30 mass% or more of the rubber component.

By using a rubber component containing a certain amount of natural rubber together with the fatty acid amide described later, it is possible to more reliably improve the on-ice performance of a vulcanized rubber composition. From a similar viewpoint, the content of the natural rubber in the rubber component is preferably 35 mass% or more, more preferably 40 mass% or more. The upper limit is preferably 100 mass% or less, more preferably 90 mass% or less, and even more preferably 80 mass% or less.

In addition to the natural rubber, the rubber component may contain any synthetic rubber.

For example, from the viewpoint of obtaining excellent cut resistance and wear resistance performance, it is preferable that the rubber component includes diene-based synthetic rubber.

Examples of the diene-based synthetic rubber include, for example, synthetic polyisoprene rubber (IR), styrene butadiene copolymer rubber (SBR), and polybutadiene rubber (BR). One of these diene-based synthetic rubbers may be used, or a blend of two or more of these diene-based synthetic rubbers may be used in the rubber component. The rubber component may also contain non-diene-based synthetic rubber depending on the required performance.

Moreover, it is preferable that the rubber component further contains a modified conjugated diene-based polymer having a functional group. By containing a modified conjugated diene-based polymer having a functional group in the rubber component, the dispersibility of the filler described later can be improved, thereby achieving more excellent wear resistance performance and on-ice performance.

There are no particular limitations on the functional group of the modified conjugated diene-based polymer, and it can be appropriately selected depending on the type of filler and the required performance. For example, the functional group is a functional group including at least one element selected from nitrogen, oxygen, and silicon. Furthermore, the modified conjugated diene-based polymer may contain two or more modified conjugated diene-based polymers with different functional groups.

Additionally, it is more preferable that the modified conjugated diene-based polymer has alkoxysilane and/or (meth)acrylate as the functional group, and it is even more preferable that the modified conjugated diene-based polymer contains both a modified conjugated diene-based polymer having alkoxysilane as the functional group and a conjugated diene-based polymer having (meth)acrylate as the functional group.

There are no particular limitations on the method of introducing a certain functional group into the conjugated diene-based polymer, and it can be performed by a known method depending on the required performance.

In addition, type of the modified functional group containing nitrogen atom is not particularly limited and may be appropriately selected according to the object of an application. Examples of the modified functional group containing a nitrogen atom include a substituted amino group represented by the general formula (I) and a cyclic amino group represented by the general formula (II) below.

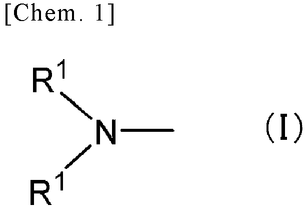

In the formula, R¹ is alkyl, cycloalkyl, or aralkyl group having 1 to 12 carbon atoms. Methyl, ethyl, butyl, octyl, or isobutyl group is preferable as the alkyl group. Cyclohexyl group is preferable as the cycloalkyl group. 3-phenyl-1-propyl group is preferable as the aralkyl group. Respective R¹s may be of the same type or different types.

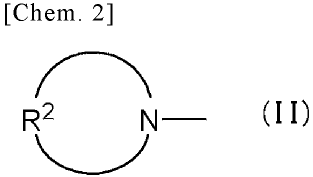

In the formula, R² is alkylene, substituted alkylene, oxyalkylene, or N-alkylamino-alkylene group having 3 to 16 methylene groups. The substituted alkylene group contains an alkylene group having one to eight substituents. Examples of the substituent include normal/branched alkyl, cycloalkyl, bicycloalkyl, aryl, or aralkyl group having 1 to 12 carbon atoms. Trimethylene, tetramethylene, hexamethylene, and dodecamethylene groups are preferable as the alkylene group. Hexadecamethylene group is preferable as the substituted alkylene group. Oxydiethylene group is preferable as the oxyalkylene group. N-alkylazadiethylene group is preferable as the N-alkylamino-alkylene group.

The type of the cyclic amino group represented by the general formula (II) is not particularly limited and may be appropriately selected according to the object of an application. Examples of the cyclic amino group include groups derived from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadece-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane, and the like, with one hydrogen atom bonded to a nitrogen atom removed. These may be used alone or in combination of two or more.

In addition, the type of the modified functional group including silicon atom is not particularly limited and may be appropriately selected according to the object of an application. Examples of the modified functional group including silicon atom include a modified functional group having silicon-carbon bond, represented by the general formula (III) below and formed by using a coupling agent.

By chemically bonding the rubber component constituting the SB phase and silicon through a silicon-carbon bond, the affinity between the SB phase and the filler is increased, and more filler can be distributed in the SB phase.

In general, when silicon is simply mixed into a rubber composition, the affinity thereof with the rubber component is low, leading to low reinforcing characteristic of the rubber composition. However, by chemically bonding the rubber component constituting the SB phase and silicon through a silicon-carbon bond, the affinity between the rubber component constituting the SB phase and the filler is increased, and the hysteresis loss of the tire can be further enhanced.
[Chem. 3]

(R³)ₐZ(R⁴)_{b} (III)

In the formula, Z represents silicon; R³s are each independently selected from the group consisting of alkyl groups having 1 to 20 carbon atoms, cycloalkyl groups having 3 to 20 carbon atoms, aryl groups having 6 to 20 carbon atoms, and aralkyl groups having 7 to 20 carbon atoms; R⁴s each independently represent chlorine or bromine; a is an integer of 0 to 3; b is an integer of 1 to 4; a + b = 4; methyl, ethyl, n-butyl, n-octyl, and 2-ethylhexyl groups are preferable as the alkyl group; cyclohexyl group is preferable as the cycloalkyl group; phenyl group is preferable as the aryl group; neophyl group is preferable as the aralkyl group; respective R³s may be of the same type or different types; and respective R⁴s may be of the same type or different types; and

When it is intended to enhance the interaction between the modified rubber and silica, the modifier may include at least one compound represented by the general formula (III-1) or the general formula (III-2) below.

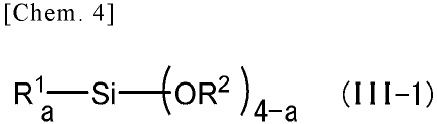

In general formula (III-1), R¹ and R² each independently represent a monovalent aliphatic hydrocarbon group having 1 to 20 carbon atoms or a monovalent aromatic hydrocarbon group having 6 to 18 carbon atoms; a represents an integer of 0 to 2; when a plurality of OR²s are present, each OR² may be the same or different; and the molecule does not include active protons.

Specific examples of the compound (alkoxysilane compound) represented by the general formula (III-1) include tetramethoxysilane, tetraethoxysilane, tetra-n-propoxysilane, tetraisopropoxysilane, tetra-n-butoxysilane, tetra-isobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, divinyldiethoxysilane, and the like. Tetraethoxysilane, methyltriethoxysilane and dimethyldiethoxysilane are preferable among these examples. These may be used either by selecting single type solely or in combination of two or more types.

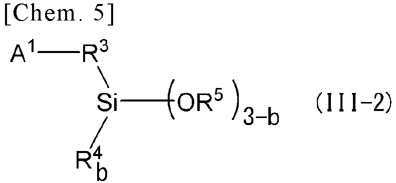

In the general formula (III-2), A¹ is a monovalent group having at least one functional group selected from the group consisting of epoxy, glycidyloxy, isocyanate, imine, carboxylic acid ester, carboxylic acid anhydride, cyclic tertiary amine, non-cyclic tertiary amine, pyridine, silazane, and disulfide, R³ is a single bond or divalent hydrocarbon group, R⁴ and R⁵ are each independently a monovalent aliphatic hydrocarbon group having 1 to 20 carbon atoms or a monovalent aromatic hydrocarbon group having 6 to 18 carbon atoms, b is an integer of 0 to 2, and when there are multiple OR⁵s, the multiple OR⁵s may be identical or different, and the molecule does not contain any active protons.

Specific examples of the compound represented by the general formula (III-2) include epoxy group-containing alkoxysilane compounds such as 2-glycidyloxyethyltrimethoxysilane, 2-glycidyloxyethyltriethoxysilane, (2-glycidyloxyethyl)methyldimethoxysilane, 3-glycidyloxypropyltrimethoxysilane, 3-glycidyloxypropyltriethoxysilane, (3-glycidyloxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, and the like. Among these, 3-glycidyloxypropyltrimethoxysilane and 2-(3,4-epoxycyclohexyl)ethyltrimethoxysilane can be preferably used.

The type of the coupling agent using silicon is not particularly limited and may be appropriately selected according to the object of an application. Examples of the coupling agent include a hydrocarbyloxysilane compound, SiCl₄ (silicon tetrachloride), (Ra)SiCl₃, (Ra)₂SiCl₂, (Ra)₃SiCl, and the like. Ra each independently represents an alkyl group having 1 to 20 carbon atoms, a cycloalkyl group having 3 to 20 carbon atoms, an aryl group having 6 to 20 carbon atoms, or an aralkyl group having 7 to 20 carbon atoms.

A hydrocarbyloxysilane compound is preferable among these, in terms of having high affinity with silica.

The type of the hydrocarbyloxysilane compound is not particularly limited and may be appropriately selected according to the object of an application and examples thereof include a hydrocarbyloxysilane compound represented by the general formula (IV) below.

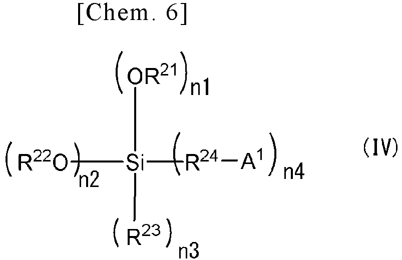

In the formula, n1 + n2 + n3 + n4 = 4 (wherein n2 is an integer of 1 to 4 and n1, n3 and n4 are each an integer of 0 to 3); A1 is at least one type of functional group selected from the group consisting of saturated cyclic tertiary amine compound residue, unsaturated cyclic tertiary amine compound residue, ketimine residue, nitrile, (thio)isocyanato ("(thio)isocyanato" represents isocyanate group or thioisocyanate group hereinafter and a similar principle applies to other "(thio)" cases, as well), (thio)epoxy, trihydrocarbyl isocyanurate ester, dihydrocarbyl carbonate ester, nitrile, pyridine, (thio)ketone, (thio)aldehyde, amide, (thio)carboxylate ester, metal salt of (thio)carboxylate ester, carboxylic anhydride residue, carboxylic halide residue, and primary/secondary amino or mercapto having a hydrolyzable group; when n4 is 2 or more, A1s may be of the same type or different types; A¹ may be a divalent group bonded to Si to form a ring structure; R²¹ is a monovalent aliphatic or cycloaliphatic hydrocarbon group having 1 to 20 carbon atoms or a monovalent aromatic hydrocarbon group having 6 to 18 carbon atoms; when n1 is ³ 2, R²¹s may be of the same type or different types; R²³ is a monovalent aliphatic or cycloaliphatic hydrocarbon group having 1 to 20 carbon atoms, a monovalent aromatic hydrocarbon group having 6 to 18 carbon atoms or a halogen atom (fluorine, chlorine, bromine, iodine); when n3 is ³ 2, R²³s may be of the same type or different types; R²² is a monovalent aliphatic or cycloaliphatic hydrocarbon group having 1 to 20 carbon atoms or a monovalent aromatic hydrocarbon group having 6 to 18 carbon atoms and may include nitrogen atom and/or silicon atom therein; when n2 is 2 or more, R²²s may be of the same type or different types and form a ring together; R²⁴ is a divalent aliphatic or cycloaliphatic hydrocarbon group having 1 to 20 carbon atoms or a divalent aromatic hydrocarbon group having 6 to 18 carbon atoms; when n4 is 2 or more, R²⁴s may be of the same type or different types; and trimethylsilyl group or tert-butyldimethylsilyl group is preferable and trimethylsilyl group is particularly preferable as the primary or secondary amino group having a hydrolyzable group or the mercapto group having a hydrolyzable group. In the present specification, a "monovalent aliphatic or cycloaliphatic hydrocarbon group having 1 to 20 carbon atoms" represents a "monovalent aliphatic hydrocarbon group having 1 to 20 carbon atoms or a monovalent cycloaliphatic hydrocarbon group having 3 to 20 carbon atoms". The same principle applies to the divalent hydrocarbon groups, as well.

Further, the hydrocarbyloxysilane compound represented by the general formula (IV) is preferably a hydrocarbyloxysilane compound represented by the general formula (V) below.

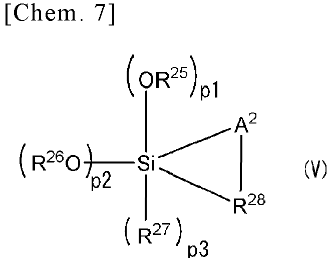

In the formula, p1 + p2 + p3 is 2 (where p2 is an integer of 1 to 3, and p1 and p3 are integers from 0 to 1); A2 represents NRa (where Ra represents a monovalent hydrocarbon group, a hydrolyzable group, or a nitrogen-containing organic group (a trimethylsilyl group or a tert-butyl dimethylsilyl group is preferred as the hydrolyzable group, with the trimethylsilyl group being particularly preferred.) or sulfur; R²⁵ represents a monovalent aliphatic or cycloaliphatic hydrocarbon group having 1 to 20 carbon atoms or a monovalent aromatic hydrocarbon group having 6 to 18 carbon atoms; R²⁷ represents a monovalent aliphatic or cycloaliphatic hydrocarbon group having 1 to 20 carbon atoms, a monovalent aromatic hydrocarbon group having 6 to 18 carbon atoms, or a halogen atom (fluorine, chlorine, bromine, or iodine); R²⁶ represents a monovalent aliphatic or cycloaliphatic hydrocarbon group having 1 to 20 carbon atoms, a monovalent aromatic hydrocarbon group having 6 to 18 carbon atoms, or a nitrogen-containing organic group, any of which may contain a nitrogen atom and/or a silicon atom; when p2 is 2, R²⁶s are the same or different or combine to form a ring; and R²⁸ represents a divalent aliphatic or cycloaliphatic hydrocarbon group having 1 to 20 carbon atoms or a divalent aromatic hydrocarbon group having 6 to 18 carbon atoms.

Yet further, the hydrocarbyloxysilane compound represented by the general formula (IV) is preferably a hydrocarbyloxysilane compound represented by the general formula (VI) or general formula (VII) below.

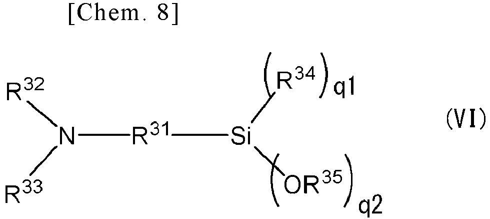

In the formula, q1 + q2 = 3 (wherein q1 is an integer of 0 to 2 and q2 is an integer of 1 to 3); R31 is a divalent aliphatic or cycloaliphatic hydrocarbon group having 1 to 20 carbon atoms or a divalent aromatic hydrocarbon group having 6 to 18 carbon atoms; R³² or R³³ each independently represents a hydrolyzable group, a monovalent aliphatic or cycloaliphatic hydrocarbon group having 1 to 20 carbon atoms or a monovalent aromatic hydrocarbon group having 6 to 18 carbon atoms; R³⁴ is a monovalent aliphatic or cycloaliphatic hydrocarbon group having 1 to 20 carbon atoms or a monovalent aromatic hydrocarbon group having 6 to 18 carbon atoms; R³⁴s may be of the same type or different types when q1 is 2; R³⁵ is a monovalent aliphatic or cycloaliphatic hydrocarbon group having 1 to 20 carbon atoms or a monovalent aromatic hydrocarbon group having 6 to 18 carbon atoms; and R³⁵s may be of the same type or different types when q2 is 2 or more.

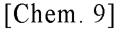

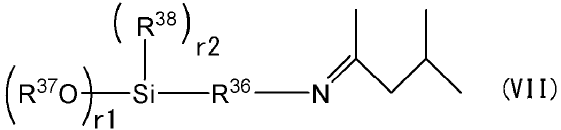

In the formula, r1 + r2 = 3 (wherein r1 is an integer of 1 to 3 and r2 is an integer of 0 to 2); R³⁶ is a divalent aliphatic or cycloaliphatic hydrocarbon group having 1 to 20 carbon atoms or a divalent aromatic hydrocarbon group having 6 to 18 carbon atoms; R³⁷ is a dimethylaminomethyl, dimethylaminoethyl, diethylaminomethyl, diethylaminoethyl, methylsilyl(methyl) aminomethyl, methylsilyl(methyl) aminoethyl, methylsilyl(ethyl) aminomethyl, methylsilyl(ethyl) aminoethyl, dimethylsilylaminomethyl, or dimethylsilylaminoethyl group, or a monovalent aliphatic or cycloaliphatic hydrocarbon group having 1 to 20 carbon atoms or a monovalent aromatic hydrocarbon group having 6 to 18 carbon atoms; R³⁷s may be of the same type or different types when r1 is 2 or more; R³⁸ is a hydrocarbyloxy group having 1 to 20 carbon atoms, or a monovalent aliphatic or cycloaliphatic hydrocarbon group having 1 to 20 carbon atoms or a monovalent aromatic hydrocarbon group having 6 to 18 carbon atoms; and R³⁸s may be of the same type or different types when r2 is 2.

Yet further, the hydrocarbyloxysilane compound represented by the general formula (IV) is preferably a compound including at least two nitrogen atoms represented by the general formula (VIII) or general formula (IX) below.

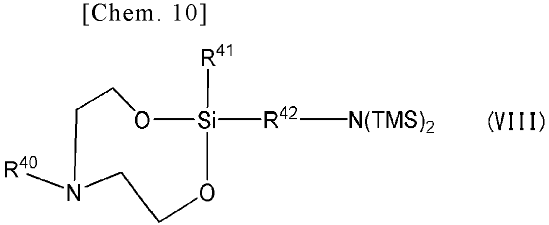

In the formula, TMS represents a trimethylsilyl group; R⁴⁰ represents a trimethylsilyl group, or a monovalent aliphatic or cycloaliphatic hydrocarbon group having 1 to 20 carbon atoms or a monovalent aromatic hydrocarbon group having 6 to 18 carbon atoms; R⁴¹ is a hydrocarbyloxy group having 1 to 20 carbon atoms, or a monovalent aliphatic or cycloaliphatic hydrocarbon group having 1 to 20 carbon atoms or a monovalent aromatic hydrocarbon group having 6 to 18 carbon atoms; and R⁴² is a divalent aliphatic or cycloaliphatic hydrocarbon group having 1 to 20 carbon atoms or a divalent aromatic hydrocarbon group having 6 to 18 carbon atoms.

In the formula, TMS represents a trimethylsilyl group; R⁴³ and R⁴⁴ each independently represent a divalent aliphatic or cycloaliphatic hydrocarbon group having 1 to 20 carbon atoms or a divalent aromatic hydrocarbon group having 6 to 18 carbon atoms; R⁴⁵ represents a monovalent aliphatic or cycloaliphatic hydrocarbon group having 1 to 20 carbon atoms or a monovalent aromatic hydrocarbon group having 6 to 18 carbon atoms; and a plurality of R⁴⁵s may be of the same type or different types.

Yet further, the hydrocarbyloxysilane compound represented by the general formula (IV) is preferably a hydrocarbyloxysilane compound represented by the general formula (X) below.

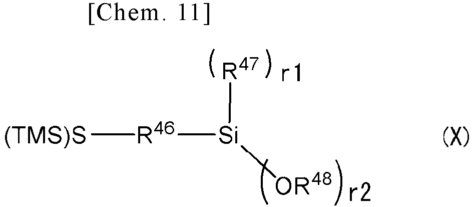

In the formula, r1 + r2 = 3 (wherein r1 is an integer of 0 to 2 and r2 is an integer of 1 to 3); TMS represents a trimethylsilyl group; R⁴⁶ represents a divalent aliphatic or cycloaliphatic hydrocarbon group having 1 to 20 carbon atoms or a divalent aromatic hydrocarbon group having 6 to 18 carbon atoms; and R⁴⁷ and R⁴⁸ each independently represent a monovalent aliphatic or cycloaliphatic hydrocarbon group having 1 to 20 carbon atoms or a monovalent aromatic hydrocarbon group having 6 to 18 carbon atoms. A plurality of R⁴⁷s or R⁴⁸s may be the same or different.

Yet further, the hydrocarbyloxysilane compound represented by the general formula (IV) is preferably a compound represented by the general formula (XI) below.

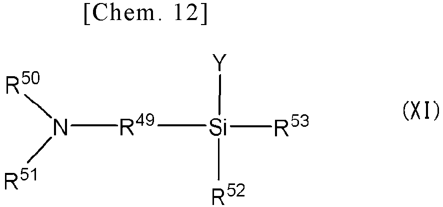

In the formula, Y represents a halogen atom; R⁴⁹ represents a divalent aliphatic or cycloaliphatic hydrocarbon group having 1 to 20 carbon atoms or a divalent aromatic hydrocarbon group having 6 to 18 carbon atoms; R⁵⁰ and R⁵¹ each independently represent a hydrolyzable group, or a monovalent aliphatic or cycloaliphatic hydrocarbon group having 1 to 20 carbon atoms or a monovalent aromatic hydrocarbon group having 6 to 18 carbon atoms; alternatively, R⁵⁰ and R⁵¹ may be bonded to each other to form a divalent organic group; R⁵² and R⁵³ each independently represent a halogen atom, a hydrocarbyloxy group, a monovalent aliphatic or cycloaliphatic hydrocarbon group having 1 to 20 carbon atoms, or a monovalent aromatic hydrocarbon group having 6 to 18 carbon atoms; and R⁵⁰ and R⁵¹ are preferably hydrolyzable groups (trimethylsilyl group or tert-butyldimethylsilyl group is preferable and trimethylsilyl group is particularly preferable as the hydrolyzable group.

The hydrocarbyloxysilane compound represented by general formulae (IV) to (XI) described above is preferably used in a case where the modified rubber component is generated by anion polymerization.

Further, the hydrocarbyloxysilane compound represented by general formulae (IV) to (XI) is preferably an alkoxysilane compound.

The type of a modifying agent preferably used when the diene-based polymer is modified by anion polymerization is not particularly limited and can be selected in an appropriate manner according to the object of an application. Examples of the modifying agent include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, 1-methyl-2-pyrrolidone, and the like. These may be used alone or in combination of two or more.

The hydrocarbyloxysilane compound is preferably an amide portion of a lithium amide compound used as a polymerization initiator in anion polymerization.

The type of the lithium amide compound is not particularly limited and may be appropriately selected according to the object of an application. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, and the like. A modifying agent which is to constitute an amide portion of lithium hexamethyleneimide, for example, is hexamethyleneimine. A modifying agent which is to constitute an amide portion of lithium pyrrolidide is pyrrolidine. A modifying agent which is to constitute an amide portion of lithium piperidide is piperidine. These may be used alone or in combination of two or more.

The type of the modified functional group containing oxygen atom is not particularly limited and may be appropriately selected according to the object of an application. Examples of the modified functional group containing oxygen atom include: an alkoxy group such as methoxy, ethoxy, n-propoxy, isopropoxy, n-butoxy, sec-butoxy, t-butoxy; an alkoxyalkyl group such as methoxymethyl, methoxyethyl, ethoxymethyl, ethoxyethyl; an alkoxyaryl group such as methoxyphenyl, ethoxyphenyl; an alkylene oxide group such as epoxy, tetrahydrofuranyl; a trialkylsilyloxy group such trimethylsilyloxy, triethylsilyloxy, t-butyldimethylsilyloxy; and the like. These adhesives may be used alone or in combination.

The content of the modified conjugated diene-based polymer in the rubber component is not particularly limited, but from the viewpoint of achieving more excellent wear resistance performance and on-ice performance, it is preferably 10 to 90 mass%, more preferably 12 to 85 mass%, more preferably 13 to 78 mass%, more preferably 15 to 70 mass%, more preferably 17 to 60 mass%, and further preferably 18 to 55 mass%.

### (Fatty Acid Amide)

The rubber composition for tires of the present disclosure also contains a fatty acid amide.

The fatty acid amide can promote the hydrophilicity of the rubber surface and increase the viscous resistance, thereby greatly improving the on-ice performance when the rubber composition for tires is applied to a tire.

Here, the content of the fatty acid amide is preferably 0.1 to 10 parts by mass per 100 parts by mass of the rubber component. When the content of the hydrocarbyl group-containing cyclic polyol compound is 0.1 parts by mass or more per 100 parts by mass of the rubber component, sufficient improvement in on-ice performance can be obtained. On the other hand, when the content of the fatty acid amide is 10 parts by mass or less per 100 parts by mass of the rubber component, the reduction in performance such as wear resistance performance and reinforcing characteristic of the rubber composition for tires can be suppressed.

From a similar viewpoint, the content of the fatty acid amide is preferably 0.1 to 8 parts by mass, more preferably 0.3 to 5 parts by mass per 100 parts by mass of the rubber component.

Furthermore, from a similar viewpoint, the mass ratio of the content of the liquid polymer to the content of the fatty acid amide (content of the liquid polymer/content of the fatty acid amide) is preferably 1 to 10.

Here, the type of fatty acid amide is not particularly limited as long as it can promote the provision of the hydrophilicity of the rubber surface. Examples include caproic acid amide, lauric acid amide, myristic acid amide, palmitic acid amide, stearic acid amide, oleic acid amide, erucic acid amide, methylenebisstearyl amide, ethylenebisstearyl amide, and the like.

Furthermore, from the viewpoint of achieving more excellent on-ice performance, it is preferable that the fatty acid amide is a fatty acid bisamide, and more preferably an ethylenebis fatty acid amide.

Here, examples of the ethylenebis fatty acid amide include ethylenebis stearyl amide and ethylenebis oleyl amide.

### (Liquid Polymer)

The rubber composition for tires of the present disclosure preferably contains a liquid polymer with a polystyrene-equivalent weight average molecular weight measured by gel permeation chromatography of 5,000 or more and less than 40,000, in addition to the rubber component and fatty acid amide described above.

By containing the liquid polymer, the rubber composition for tires as a whole can ensure flexibility, and when used together with the cyclic polyol compound and filler described later, it is possible to achieve both on-ice performance and wear resistance performance at a high level.

Here, the liquid polymer is a polymer with a polystyrene-equivalent weight average molecular weight measured by gel permeation chromatography of 5,000 or more and less than 40,000, and is more preferably an unmodified conjugated diene-based polymer with a bound styrene content of less than 10% and a vinyl bond content in the conjugated diene compound moiety of 20% or more. The liquid polymer is more likely to be unevenly distributed in the natural rubber phase of the rubber component, resulting in better on-ice performance.

Moreover, from the viewpoint of achieving better on-ice performance, it is preferable that the vinyl bond content in the conjugated diene compound moiety of the liquid polymer is 30% or more, more preferably 40% or more, and more preferably 45% or more. From the viewpoint of suppressing the increase in hardness of rubber, the vinyl bond content in the conjugated diene compound moiety of the liquid polymer is preferably 70% or less, more preferably 65% or less, and even more preferably 55% or less.

Furthermore, the content of the liquid polymer is preferably 1 to 40 parts by mass per 100 parts by mass of the rubber component. This is because it can provide flexibility to the rubber composition for tires, improve the on-ice performance of the vulcanized rubber and the tire with a tread portion obtained from the rubber composition for tires, and suppress the reduction in wear resistance performance.

From a similar viewpoint, the content of the liquid polymer is preferably 3 to 30 parts by mass, more preferably 5 to 25 parts by mass, and even more preferably 7 to 20 parts by mass per 100 parts by mass of the rubber component.

The liquid polymer preferably has a low molecular weight so that it does not form a crosslinked structure with the rubber component (A) after the rubber composition for tires is vulcanized. Specifically, the polystyrene-equivalent weight average molecular weight measured by gel permeation chromatography (hereinafter, sometimes simply referred to as the weight average molecular weight) is preferably 5,000 or more and less than 40,000.

If the weight average molecular weight of the liquid polymer is less than 5,000, the vulcanized rubber and the tread portion of the tire obtained from the rubber composition for tires may become excessively flexible, potentially compromising wear resistance performance. If the weight average molecular weight of the liquid polymer is 40,000 or more, flexibility is lost, and the on-ice performance of the vulcanized rubber and the tire with a tread portion obtained from the rubber composition for tires may be compromised.

Furthermore, from a similar viewpoint, the weight average molecular weight of the liquid polymer is preferably 5,500 to 30,000, more preferably 6,000 to 25,000, and even more preferably 6,500 to 20,000.

It is also preferable that the liquid polymer is an unmodified conjugated diene-based polymer. When the bound styrene content in the conjugated diene compound moiety is less than 10%, the flexibility of the rubber composition for tires can be sufficiently ensured, and the on-ice performance of the vulcanized rubber and the tire with a tread portion obtained from the rubber composition for tires can be further enhanced.

From a similar viewpoint, the bound styrene content in the conjugated diene compound moiety of the liquid polymer is preferably 5% or less, more preferably 3% or less, and particularly preferably 0%.

The reason why the liquid polymer is preferably an unmodified polymer is that the liquid polymer is less likely to interact with the filler described later, and the inclusion of the filler in the natural rubber phase is suppressed, thereby maintaining good on-ice performance.

Here, the conjugated diene-based polymer is not particularly limited as long as it has a certain weight average molecular weight, a bound styrene content in the conjugated diene compound moiety below a certain value, and a certain vinyl bond content. However, a homopolymer of a conjugated diene compound or a copolymer of an aromatic vinyl compound and a conjugated diene compound is preferred.

Examples of the conjugated diene compound as a monomer include 1,3-butadiene, isoprene, 1,3-pentadiene, 2,3-dimethylbutadiene, 2-phenyl-1,3-butadiene, 1,3-hexadiene, and the like, with 1,3-butadiene and isoprene being preferred. On the other hand, examples of the aromatic vinyl compound as a monomer include styrene, p-methylstyrene, m-methylstyrene, p-tert-butylstyrene, α-methylstyrene, chloromethylstyrene, vinyltoluene, and the like.

As the liquid polymer, either or both of polybutadiene and polyisoprene are preferred, with polybutadiene being more preferred. Note that these monomers may be used alone or in combination of two or more others.

Moreover, when the liquid polymer is an aromatic vinyl compound-conjugated diene compound copolymer, it is preferable that the bound content of the aromatic vinyl compound is less than 5 mass%. By setting the bound content of the aromatic vinyl compound to less than 5 mass%, it is possible to suppress an increase in the hardness of the rubber and a decrease in on-ice performance.

There are no particular limitations on the method for producing the conjugated diene-based polymer as the liquid polymer, and it can be obtained, for example, by polymerizing a conjugated diene compound as a monomer alone or as a mixture with an aromatic vinyl compound as a monomer in a hydrocarbon solvent inert to the polymerization reaction.

The polymerization initiator used for synthesizing the conjugated diene-based polymer is preferably a lithium compound, with n-butyllithium being more preferable. When a lithium compound is used as the polymerization initiator, the aromatic vinyl compound and the conjugated diene compound are polymerized through anionic polymerization.

There are no particular limitations on the method for producing the conjugated diene-based polymer using a polymerization initiator, and it can be produced, for example, by polymerizing a monomer in a hydrocarbon solvent inert to the polymerization reaction, as described above.

Here, examples of the hydrocarbon solvent inert to the polymerization reaction include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone or in combination of two or more thereof.

The polymerization reaction is preferably carried out in the presence of a randomizer.

A randomizer can control the microstructure of the conjugated diene compound moiety of the (co)polymer, and more specifically, it has effects, such as the effect of controlling the vinyl bond content in the conjugated diene compound moiety of the (co)polymer or randomizing the conjugated diene compound units and aromatic vinyl compound units in the copolymer.

Examples of the randomizer include dimethoxybenzene, tetrahydrofuran, dimethoxyethane, diethylene glycol dibutyl ether, diethylene glycol dimethyl ether, ditetrahydrofuryl propane, triethylamine, pyridine, N-methylmorpholine, N,N,N',N'-tetramethylethylenediamine, 1,2-dipiperidinoethane, potassium-t-amylate, potassium-t-butoxide, and sodium-t-amylate. The amount of these randomizers used is preferably in the range of 0.1 to 100 molar equivalents per mole of the polymerization initiator.

Anionic polymerization is preferably carried out via solution polymerization, and the concentration of the monomer in the polymerization reaction solution is preferably in the range of 5 to 50 mass%, more preferably in the range of 10 to 30 mass%. When a combination of a conjugated diene compound and an aromatic vinyl compound is used, the content of the aromatic vinyl compound in the monomer mixture can be appropriately selected depending on the desired content of the aromatic vinyl compound in the copolymer. Furthermore, the polymerization method is not particularly limited and may be either batch or continuous.

The polymerization temperature of the anionic polymerization is preferably in a range of 0 to 150 °C, more preferably in a range of 20 to 130 °C. Also, although the polymerization may be carried out under a generated pressure, typically, the polymerization is preferably carried out under a pressure sufficient to substantially maintain the used monomers in a liquid phase. Here, when the polymerization reaction is carried out under a pressure higher than the generated pressure, the reaction system is preferably pressured with an inert gas. Further preferably, from raw materials used for the polymerization such as the monomer, the polymerization initiator, and the solvents, reaction inhibiting substances such as water, oxygen, carbon dioxide, a protonic compound, and the like are preliminarily removed.

The weight average molecular weight of the liquid polymer, the bound styrene content in the conjugated diene compound moiety, and the vinyl bond content in the conjugated diene compound moiety can be adjusted by controlling the amount of monomer used in the polymerization, the degree of polymerization, or the like. In addition, the bound styrene content in the conjugated diene compound moiety and the vinyl bond content in the conjugated diene compound moiety of the liquid polymer (sometimes referred to as the microstructure of the liquid polymer) can be determined by infrared spectroscopy (Morello method).

### (Filler)

The rubber composition for tires of the present disclosure preferably further contains a filler including at least one of silica and carbon black, in addition to the above-mentioned rubber component, fatty acid amide, and liquid polymer.

By including a filler containing at least one of silica and carbon black together with the rubber component, it is possible to further enhance the properties such as wear resistance performance and on-ice performance of the vulcanized rubber composition.

From a similar viewpoint, it is more preferable that the filler includes both the silica and the carbon black.

Here, the types of the silica include wet silica (hydrous silicate), dry silica (anhydrous silicate), calcium silicate, and aluminum silicate. Among these, wet silica is preferable. One kind of these silicas may be used alone, or two or more kinds may be used in combination.

Moreover, precipitated silica may be used as the wet silica. As used herein, the term "precipitated silica" refers to silica that is obtained by, during the early part of the production process, allowing a reaction solution to react in a relatively high temperature and in a neutral to alkaline pH range to grow silica primary particles, and then controlling the solution to an acidic side so as to cause agglomeration of the primary particles.

While the silica is not particularly limited, one with a CTAB specific surface area (specific surface area by cetyltrimethylammonium bromide adsorption) of 70 m²/g or more and 250 m²/g or less may be used. The CTAB specific surface area refers to a value measured in accordance with ASTM D3765-92. The CTAB specific surface area (m²/g) calculated from the adsorption amount of CTAB is defined as the specific surface area calculated by assuming the adsorption cross-sectional area per molecule of cetyltrimethylammonium bromide on the silica surface to be 0.35 nm².

Moreover, the BET specific surface area of the silica may be 100 m²/g or more and 250 m²/g or less. The BET specific surface area refers to the specific surface area determined by the BET method, and in this disclosure, it can be measured in accordance with ASTM D4820-93.

The content of the silica is preferably 5 to 90 parts by mass, more preferably 10 to 70 parts by mass, and even more preferably 20 to 65 parts by mass, per 100 parts by mass of the rubber component. When the content of the silica is 5 parts by mass or more per 100 parts by mass of the rubber component, the wear resistance performance and on-ice performance of the vulcanized rubber composition can be further improved. By setting it to 90 parts by mass or less, a reduction in the processability or low rolling resistance of the rubber composition for tires can be suppressed.

Furthermore, the type of carbon black is not particularly limited, and examples include carbon black of GPF, FEF, HAF, N339, IISAF, ISAF, and SAF grades. Among these, carbon black of ISAF and SAF grades are preferable from the viewpoint of improving the wear resistance performance of the rubber composition for tires. One kind of these carbon blacks may be used alone, or two or more kinds may be used in combination.

Additionally, as the carbon black, one with a nitrogen adsorption specific surface area (N₂SA, measured in accordance with JIS K 6217-2:2001) of 20 to 250 m²/g may be used, one with a nitrogen adsorption specific surface area of 30 to 200 m²/g may be used, or one with a nitrogen adsorption specific surface area of 30 to 150 m²/g may be used.

Moreover, as the carbon black, one with a dibutyl phthalate (DBP) oil absorption (measured according to the method described in JIS K 6217-4:2001 "Method for determining DBP oil absorption") of 50 to 200 cm³/100 g may be used, or one with a dibutyl phthalate (DBP) oil absorption of 60 to 150 cm³/100 g may be used.

The content of the carbon black is not particularly limited, but it is preferably 5 to 90 parts by mass, more preferably 20 to 80 parts by mass, even more preferably 25 to 70 parts by mass, and particularly preferably 30 to 65 parts by mass, per 100 parts by mass of the rubber component. When the content of the carbon black is 5 parts by mass or more per 100 parts by mass of the rubber component, the wear resistance performance can be further improved. By setting it to 90 parts by mass or less, a reduction in low heat generation can be suppressed more reliably.

Moreover, the total content of the silica and the carbon black is preferably 50 to 90 parts by mass per 100 parts by mass of the rubber component. This is because it is possible to further enhance the properties such as wear resistance performance and on-ice performance of the vulcanized rubber composition while maintaining good performances such as low heat generation and processability.

Furthermore, the mass ratio of the content of the carbon black to the content of the silica (content of carbon black/content of silica) is preferably 0.5 to 2, more preferably 0.5 to 1.5, and even more preferably 0.7 to 1.2.

When the mass ratio of the content of the carbon black to the content of the silica is 0.5 or more, more excellent wear resistance performance and reinforcing characteristic can be obtained, and when the mass ratio of the content of the carbon black to the content of the silica is 2 or less, reduction in low heat generation is prevented.

Additionally, the filler may include, in addition to the above-mentioned silica and carbon black, an inorganic compound represented by the following general formula (XX): 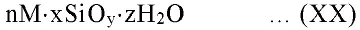 [in the formula, M is a metal selected from the group consisting of aluminum, magnesium, titanium, calcium, and zirconium, oxides or hydroxides of the above metals, hydrates thereof, and carbonates of the above metals; and m, x, y, and z are an integer of 1 to 5, an integer of 0 to 10, an integer of 2 to 5, and an integer of 0 to 10, respectively].

Examples of the inorganic compound of the aforementioned general formula (XX) may include: alumina (Al₂O₃) such as γ-alumina, α-alumina; hydrated alumina (Al₂O₃·H₂O) such as boehmite, diaspore; aluminum hydroxide [Al(OH)₃] such as gibbsite, bayerite; aluminum carbonate [Al2(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO2), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (such as Al2SiO5, Al₄·3SiO₄·5H₂O), magnesium silicate (such as Mg2SiO₄, MgSiO3), calcium silicate (such as Ca₂SiO₄), calcium aluminum silicate (such as Al₂O₃·CaO·2SiO₂), calcium magnesium silicate (CaMgSiO₄), calcium carbonate (CaCO₃), zirconium oxide (ZrO₂), zirconium hydroxide [ZrO(OH)₂·ₙH₂O], zirconium carbonate [Zr(CO₃)2], crystalline aluminosilicates, such as various zeoliates, which include hydrogen for correcting charge, alkali metal, and alkaline earth metal.

The inorganic compound of the general formula (XX) preferably has a mean particle diameter of 0.01 to 10 µm, more preferably 0.05 to 5 µm, from the viewpoint of balancing wear resistance performance and wet performance.

### (Space-introducing Agent)

Moreover, the rubber composition for tires of the present disclosure preferably further contains a space-introducing agent in addition to the above-mentioned rubber component, fatty acid amide, and liquid polymer, and the filler as a suitable component. When the rubber composition for tires of the present disclosure contains the space-introducing agent, spaces can be formed on the surface or inside, or on the surface and inside of a vulcanized rubber. As a result, the tire to which this vulcanized rubber is applied has flexibility, it easily adheres to icy road surfaces, and water on the road surface is easily absorbed into the spaces on the tire surface, so that water is likely removed from the icy or snowy surfaces. Accordingly, the on-ice performance can be improved.

By including a space-introducing agent as described above, the rubber composition for tires of the present disclosure after vulcanization (hereinafter referred to as "vulcanized rubber composition") can have spaces on the surface and inside, and the on-ice performance can be further enhanced.

Here, the spaces in the vulcanized rubber composition refer to pores formed in multiple numbers with an average diameter of about 1 to 500 µm in the vulcanized rubber composition. The diameter of the spaces refers to the largest diameter of the spaces (in the case of non-spherical spaces, the maximum distance D between any two points on the inner wall of the space), and the average diameter of the spaces refers to the average value of the diameters of the spaces present in the vulcanized rubber composition. In the present disclosure, a cross-section of the vulcanized rubber composition is observed with a digital microscope ("VHX-100", manufactured by Keyence Corporation), and the average diameter of all the spaces present in one field of view (2.5 mm × 2.5 mm) is used as the average diameter of the spaces. In the vulcanized rubber composition, since the shape and size of the spaces do not vary greatly within a single vulcanized rubber composition, the average diameter of the spaces in one field of view can be used as the average diameter of the spaces.

Moreover, the porosity of the vulcanized rubber composition is preferably 5 to 45%. By setting the lower limit of the porosity to 5%, the on-ice performance can be improved more reliably. From a similar viewpoint, the porosity is preferably 7% or more, more preferably 15% or more. On the other hand, by setting the upper limit of the porosity to 45%, even when there are multiple spaces, a reduction in wear resistance performance can be suppressed more reliably. From a similar viewpoint, the porosity is preferably 40% or less, more preferably 37% or less.

The porosity refers to the volume ratio (volume %) of the spaces in the vulcanized rubber composition. The method for measuring the porosity is not particularly limited and can be measured using a specific gravity meter (ViBRA specific gravity meter "DMA-220", manufactured by Shinko Denshi Co., Ltd.) or the like.

Examples of the space-introducing agent include, for example, foaming agents, sulfuric acid metal salts, thermally expandable microcapsules, porous cellulose particles, and lignin derivatives, and one or more of these may be used alone or in a mixture of two or more. Furthermore, from the viewpoint of on-ice performance, it is preferable to use the foaming agent described above.

The content of the space-introducing agent in the rubber composition is not particularly limited, but is preferably 0.1 to 20 parts by mass, more preferably 0.3 to 10 parts by mass, and even more preferably 0.5 to 5 parts by mass per 100 parts by mass of the rubber component, from the viewpoint of obtaining the desired porosity and maintaining wear resistance performance and other performances.

### - Foaming Agent

When the rubber composition for tires of the present disclosure contains a foaming agent as the space-introducing agent, the foaming agent generates bubbles in a vulcanized rubber during vulcanization of the rubber composition for tires of the present disclosure, so that the vulcanized rubber can be made into foamed rubber. Since the foam rubber has flexibility, the tire surface made of vulcanized rubber easily adheres to icy road surfaces. In addition, the bubbles also create holes (foaming holes) in the vulcanized rubber surface and tire surface, which function as water channels to drain water.

Specifically, examples of the foaming agent include azodicarbonamide (ADCA), dinitrosopentamethylenetetramine (DPT), dinitrosopentastyrenetetramine, benzene sulfonyl hydrazide derivatives, p,p'-oxybisbenzenesulfonyl hydrazide (OBSH), inorganic foaming agents, such as carbonates, e.g., ammonium carbonate, sodium carbonate, and potassium carbonate, and bicarbonates (hydrogen carbonates), e.g., ammonium bicarbonate, sodium bicarbonate, potassium bicarbonate, and nitroso sulfonyl azo compounds, N,N'-dimethyl-N,N'-dinitrosophthalamide, toluene sulfonyl hydrazide, p-toluenesulfonyl semicarbazide, and p,p'-oxybisbenzenesulfonyl semicarbazide that generate nitrogen. Of these, azodicarbonamide (ADCA), dinitrosopentamethylenetetramine (DPT), and inorganic foaming agents are preferable in terms of production workability. One of such foaming agents may be used alone or two or more thereof may be used in combination.

The content of the foaming agent in the rubber composition for tires is not limited, but is preferably 1 to 10 parts by mass and more preferably 2 to 8 parts by mass per 100 parts by mass of the rubber component.

The rubber composition for tires may further include a foaming aid such as urea, zinc stearate, zinc benzenesulfinate, zinc oxide, and the like. These may be used alone or in combination of two or more. By also using the foaming aid, foam reaction can be promoted to enhance the degree of completion of the reaction, thus suppressing unwanted degradation over time.

### - Sulfuric Acid Metal Salt

When the rubber composition for tires of the present disclosure contains a sulfuric acid metal salt as the space-introducing agent, the sulfuric acid metal salt protrudes from the surface of the tire obtained by vulcanizing the rubber composition for tires and provides a claw function without the disadvantage of being abrasive. Subsequently, the gradual evacuation of the sulfuric acid metal salt from the rubber matrix creates spaces that serve as a storage volume and channels for draining the water film from the ice surface. Under these conditions, the contact between the tire surface (for example, the surface of the tread) and the ice is no longer lubricated, and the friction coefficient is thus improved.

Magnesium sulfate can be cited as the sulfuric acid metal salt.

The sulfuric acid metal salt is preferably particles having sizes in the order of micrometers. Specifically, the mean grain size and the median grain size (both expressed in mass) are preferably 1 µm to 1 mm, and the median grain size is preferably 2 µm to 800 µm.

When the mean grain size and the median grain size are 1 µm or more, the target technical effect (i.e., formation of appropriate fine roughness) is likely to be achieved. In addition, when the mean grain size and the median grain size are 1 mm or less, a decrease in the aesthetical characteristic is prevented (i.e., the appearance of particles that are too obvious on the tread surface is prevented) and the grip performance on melting ice is less likely to be impaired, especially when the rubber composition for tires is used as a tread.

For all of these reasons, the median grain size of the sulfuric acid metal salt is preferably 2 µm to 500 µm, and more preferably 5 µm to 200 µm. This particularly preferred grain size range seems to correspond to an optimal compromise between the desired surface roughness on the one hand and good contact between the rubber composition for tires and ice on the other.

Furthermore, for the same reasons as above, the content of the sulfuric acid metal salt in the rubber composition for tires of the present disclosure is preferably 5 to 40 parts by mass, more preferably 10 to 35 parts by mass, per 100 parts by mass of the rubber component.

Note that various known methods for grain size analyses and calculations of the median grain size of the microparticles (or mean diameter of the microparticles assuming that they are substantially spherical) can be applied, such as the method using laser diffraction (see, for example, the standard ISO-8130-13 or standard JIS K5600-9-3), for example.

In addition, a grain size analysis by mechanical sieving can also be easily and preferably used. The operation thereof includes sifting a defined amount of sample (e.g., 200 g) on a vibrating table for 30 minutes with sieves having various sieve diameters (e.g., 1000, 800, 630, 500, 400, ..., 100, 80, and 63 µm meshes according to a progressive ratio equal to 1.26). The particles with excess sizes left on each sieve are collected and weighed on a precision balance, and the percent of particles with excess sizes at each mesh diameter relative to the total mass of the material is estimated from the weight thereof. Finally, the median grain size (or median diameter) or mean grain size (or mean diameter) is calculated from a histogram of the grain size distribution by a known method.

### - Thermally Expandable Microcapsule

Thermally expandable microcapsules are made of a thermally expandable substance encapsulated in a shell material made of a thermoplastic resin. The shell material of the thermal expansive microcapsules can be formed from a nitrile-based polymer.

The thermal expansive substance encapsulated in the shell material of the microcapsules has the property of vaporizing or expanding by heat, and examples thereof include at least one selected from the group consisting of hydrocarbons such as isoalkanes and normal alkanes. Examples of isoalkanes include isobutane, isopentane, 2-methylpentane, 2-methylhexane, and 2,2,4-trimethylpentane. Examples of normal alkanes include n-butane, n-propane, n-hexane, n-heptane, and n-octane. These hydrocarbons may be used alone or may be used in combination with two or more. A preferred form of thermal expansive material is a hydrocarbon that is liquid at room temperature dissolved in a hydrocarbon that is gas at room temperature. By using such a mixture of hydrocarbons, sufficient expansion force can be obtained from low to high temperature regions in the vulcanization molding temperature range (150 °C to 190 °C) for unvulcanized tires.

As such thermal expansive microcapsules, for example, products having trade names of "EXPANCEL 091DU-80" or "EXPANCEL 092DU-120", etc. manufactured by Expancel, Sweden, or products having trade names of "Matsumoto Microsphere F-85D" or "Matsumoto Microsphere F-100D", etc. manufactured by Matsumoto Yushi-Seiyaku Co., Ltd. can be used.

The content of the thermally expandable microcapsules in the rubber composition for tires is preferably 0.1 to 10 parts by mass, and more preferably 0.5 to 5 parts by mass, per 100 parts by mass of the rubber component.

### - Porous Cellulose Particles

When the rubber composition for tires of the present disclosure contains porous cellulose particles as the space-introducing agent, water on icy or snowy surfaces is absorbed by the porous cellulose particles when the porous cellulose particles are exposed on the surface of the tire surface that is obtained by vulcanizing the rubber composition for tires. As a result, the water between the tire and the road surface can be removed. In addition, the presence of cellulose, which is a polysaccharide, enhances the interaction between the tire and the water on the icy or snowy surface due to a modified polyoxyalkylene glycol.

The porous cellulose particles are cellulose particles having a porous structure with a porosity of 75 to 95%, and can significantly improve on-ice performance when blended into the rubber composition for tires A porosity of 75% or more of the porous cellulose particles provides an excellent effect of improving the on-ice performance, while a porosity of 95% or lower enhances the strength of the particles. The porosity is more preferably 80 to 90%.

Note that the porosity of the porous cellulose particles can be determined as follows. The volume of a sample (i.e., porous cellulose particles) of a certain mass is measured with a measuring cylinder to determine the bulk specific gravity. The porosity is calculated from the following formula. Porosity [%] = {1 - (bulk specific gravity of sample [g/ml])/(true specific gravity of sample [g/ml])} × 100

Here, the true specific gravity of cellulose is 1.5.

The particle diameter of the porous cellulose particles is not particularly limited, but from the viewpoint of wear resistance performance, those with a mean particle diameter of 1000 µm or less are preferably used. The lower limit of the mean particle diameter is not particularly limited, but is preferably 5 µm or more. The mean particle diameter is more preferably 100 to 800 µm, and even more preferably 200 to 800 µm.

Spherical particles with a ratio of the long diameter to the short diameter of 1 to 2 are preferably used as the porous cellulose particles. The use of particles with such a spherical structure improves their dispersibility into the rubber composition for tires and contributes to improved on-ice performance and maintenance of wear resistance performance and other performance. The ratio of the long diameter to the short diameter is more preferably 1.0 to 1.5.

The mean particle diameter of the porous cellulose particles and the ratio of the long diameter to the short diameter are determined as follows. Specifically, porous cellulose particles are observed under a microscope to obtain an image(s). Using the image(s), the long diameters and the short diameters of 100 particles (if the long diameters and the short diameters are the same, the lengths in one axial direction and the lengths in an axial direction orthogonal to the one axial direction) are determined, and the average value is calculated to determine the mean particle diameter. The ratio of the long diameter to the short diameter is obtained by dividing the long diameters by the short diameters and determining the average of the resultant values.

Such porous cellulose particles are commercially available as "Viscopearl" from Rengo Co., Ltd., and are also disclosed in JP 2001-323095 A, JP 2004-115284 A, or the like. They can be suitably used.

The content of the porous cellulose particles in the rubber composition for tires is preferably 0.3 to 20 parts by mass per 100 parts by mass of the rubber component. A content of 0.3 parts by mass or more increases the effect of improving the on-ice performance, and a content of 20 parts by mass or less prevents the hardness of the rubber from being excessively high and prevents a decrease in wear resistance performance. The content of the porous cellulose particles is more preferably 1 to 15 parts by weight, and even more preferably 3 to 15 parts by mass.

### - Lignin Derivative

When the rubber composition for tires of the present disclosure contains a lignin derivative as the space-introducing agent, the effect of improving the on-ice performance can be improved.

Here, a lignin sulfonic acid salt is preferably used as the lignin derivative. Examples of the lignin sulfonic acid salt include alkali metal salts, alkaline earth metal salts, ammonium salts, and alcohol amine salts of lignin sulfonic acids, and at least one of these may be used. Alkali metal and/or alkaline earth metal salts of lignin sulfonic acids are preferred, such as potassium, sodium, calcium, magnesium, lithium, and barium salts, and a mixture of these salts may be used.

### (Foaming Aid)

In particular, when the rubber composition for tires of the present disclosure contains a foaming agent as the space-introducing agent, it is preferable to include a foaming aid. Examples of the foaming aid include urea, zinc stearate, zinc benzenesulfinate, and zinc oxide. These may be used alone or in combination of two or more.

By using the foaming aid, foam reaction can be promoted to enhance the degree of completion of the reaction, thus suppressing unwanted degradation over time.

The total content of the foaming agent and the foaming aid is preferably 1 to 30 parts by mass per 100 parts by mass of the rubber component. When the total content of the foaming agent and the foaming aid is 1 part by mass or more, the rubber composition can be sufficiently foamed during the vulcanization and the foaming ratio of vulcanized rubber can be maintained high. On the other hand, when the total content of the foaming agent and foaming aid is 30 parts by mass or less, the decrease in the foaming ratio can also be suppressed.

From the viewpoint of suppressing reduction in the foaming ratio as described above, the total content of the foaming agent and the foaming aid is preferably 3 parts by mass or more, and more preferably 5 parts by mass or more per 100 parts by mass of the rubber component. Furthermore, from the viewpoint of suppressing reduction in the foaming ratio as described above, the total content of the foaming agent and the foaming aid is preferably 25 parts by mass or less, and more preferably 20 parts by mass or less per 100 parts by mass of the rubber component.

In addition, in the rubber composition for tires of the present disclosure, the mass ratio of the foaming agent to the foaming aid (foaming agent:foaming aid) is preferably 1:1.1 to 1:1.3. If the mass ratio (foaming agent:foaming aid) is less than 1:1.1, the rubber composition may not sufficiently foam during vulcanization and the foaming ratio of vulcanized rubber may be reduced. On the other hand, if the mass ratio (foaming agent:foaming aid) exceeds 1:3.3, the foaming ratio may also be reduced.

From the viewpoint of suppressing reduction in the foaming ratio as described above, the mass ratio of the foaming agent to the foaming aid (foaming agent:foaming aid) is preferably 1: 1.2 or more, more preferably 1: 1.3 or more. Furthermore, from the viewpoint of suppressing reduction in the foaming ratio as described above, a mass ratio of the foaming agent to the foaming aid (foaming agent:foaming aid) is preferably 1:3.2 or less, more preferably 1:3.1 or less, even more preferably 1:2.9 or less, still even more preferably 1:2.7 or less, further more preferably 1:2.5 or less, and particularly preferably 1:2.3 or less.

In addition, from the viewpoint of the foaming ratio of vulcanized rubber and the on-ice performance of a tire, the content of the foaming aid is preferably in the range of 4 to 14 parts by mass, and more preferably in the range of 6 to 14 parts by mass, per 100 parts by mass of the rubber component.

### (Composite Fibers)

The rubber composition for tires of the present disclosure preferably further contains composite fibers in addition to the above-mentioned rubber component, fatty acid amide, and liquid polymer, and a filler, space-introducing agent, and foaming aid as suitable components.

By including the composite fibers, it is possible to sufficiently ensure compatibility with water, and particularly when used in tire applications, it is possible to impart excellent water drainage and on-ice performance.

Moreover, it is preferable that the composite fibers are made of a hydrophilic resin with a coating layer formed on the surface. This is because the provision of the coating layer on the surface of the composite fibers improves the dispersibility of the composite fibers in the rubber composition for tires.

It is preferable that the hydrophilic resin is water-insoluble. By using a water-insoluble hydrophilic resin, it is possible to suppress the dissolution of the composite fibers even when they are exposed on the surface of the product (e.g., tire).

The hydrophilic resin is not particularly limited as long as it is a resin that can exhibit compatibility with water, in other words, a resin having a hydrophilic group within the molecule. Specifically, resins containing oxygen atoms, nitrogen atoms, or sulfur atoms are preferred, such as resins containing at least one group selected from the group consisting of -OH, -C(=O)OH, - OC(=O)R (R is an alkyl group), -NH₂, -NCO, and -SH. Among these groups, - OH, -C(=O)OH, -OC(=O)R, -NH₂, and -NCO are preferred.

More specifically, examples of the hydrophilic resin include ethylene-vinyl alcohol copolymer, vinyl alcohol homopolymer, poly(meth)acrylic acid resin or ester resins thereof (hereinafter, copolymers containing constituent units derived from (meth)acrylic acid and (co)polymers containing constituent units derived from (meth)acrylic acid esters are collectively referred to as (meth)acrylic resins), polyamide resin, polyethylene glycol resin, carboxyvinyl copolymer, styrene-maleic acid copolymer, polyvinylpyrrolidone resin, vinylpyrrolidone-vinyl acetate copolymer, polyester resin, and cellulose-based resin. Among these, ethylene-vinyl alcohol copolymer, vinyl alcohol homopolymer, poly(meth)acrylic acid resin, polyamide resin, aliphatic polyamide-based resin, aromatic polyamide-based resin, polyester resin, polyvinyl alcohol-based resin, cellulose-based resin, or (meth)acrylic resin is preferred, with ethylene-vinyl alcohol copolymer being more preferred.

It is preferable that the surface of the fibers made of the hydrophilic resin is compatible with the rubber component, and it is preferable that a coating layer made of a low-melting-point resin having a melting point lower than the maximum vulcanization temperature (hereinafter, also referred to as "low-melting-point resin") is formed on it. By forming such a coating layer, it is possible to effectively retain the compatibility with water inherent to the hydrophilic resin while exhibiting good compatibility with the rubber component in the vicinity of the composite fibers, and to capture the hydrophilic resin that is difficult to melt during vulcanization (foaming) to promote the formation of cavities within the composite fibers. In other words, it is possible to ensure good dispersion of the composite fibers in the rubber component and sufficiently exhibit the drainage effect derived from the hydrophilic resin, as well as sufficiently exhibiting the effect of improving the on-ice performance derived from the spaces present within the composite fibers. Moreover, since the low-melting-point resin melts during vulcanization, the coating layer becomes fluid, which contributes to the adhesion between the rubber component and the composite fibers, thereby imparting good on-ice performance and wear resistance performance.

The thickness of the coating layer varies depending on the content of the hydrophilic resin and the average diameter of the composite fibers, but is preferably 0.001 to 10 µm, more preferably 0.001 to 5 µm. By forming a coating layer with a thickness within the above range, it is possible to fully exhibit the desired effects of the present disclosure. The coating layer may be formed on the entire surface of the hydrophilic resin or a part of the surface of the hydrophilic resin. Specifically, the coating layer is preferably formed to occupy at least 50% of the entire surface area of the hydrophilic resin.

The low-melting-point resin used for the coating layer is preferably a resin in which the polar component accounts for 50 mass% or less of the total components in the low-melting-point resin, and more preferably a polyolefin-based resin. If the resin in which the content of the polar component is within the above range relative to the total components is used, the difference of SP value with the rubber component becomes moderate, and the resin has a melting point moderately lower than the maximum vulcanization temperature. As a result, good compatibility with the rubber component can be sufficiently ensured, and the resin easily melts during vulcanization to promote the foaming of the vulcanized rubber. Thus, it is possible to further reliably improve the dispersion of fibers made of the hydrophilic resin in the rubber composition for tires and ensure that cavities are reliably formed inside the composite fibers.

The polyolefin-based resin may be any of branched, linear, and the like. The polyolefin-based resin may be an ionomer resin in which molecules of an ethylene-methacrylic acid copolymer are crosslinked by metal ions. Specifically, examples of the polyolefin-based resin include polyethylene, polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, and ionomer resins of these. These may be used alone or in combination of two or more kinds thereof.

Of these, the polyolefin-based resin is preferably a polyethylene-based resin, a polypropylene-based resin, a polyolefin ionomer, or a maleic anhydride modified α-polyolefin. In the case where a polyolefin ionomer or maleic anhydride modified α-polyolefin is used, the resin also adheres to hydroxyl groups of the hydrophilic resin, which contributes to improved rubber strength.

To produce composite fibers made of the hydrophilic resin with a coating layer made of the low-melting-point resin formed thereon, a method may be employed in which these resins are blended using a mixing mill and melt-spun to form undrawn yarn, and the undrawn yarn is made into fiber by heat drawing. Alternatively, the resins may be blended using two twin-screw extruders equipped with dies and then similarly made into fiber. In this case, the hydrophilic resin and the low-melting-point resin are simultaneously extruded from the two die outlets, from which undrawn yarn is formed. The amounts of the hydrophilic resin and the low-melting-point resin charged into the mixing mill or hopper may vary depending on the length and diameter of the resulting composite (fibers), but the charged amount of the low-melting-point resin is preferably 5 to 300 parts by mass, more preferably 10 to 150 parts by mass per 100 parts by mass of the hydrophilic resin. By charging these resins in the above-mentioned range, the coating layer for delivering the desired advantageous effects is effectively formed on the surface of the composite (fibers) made of the hydrophilic resin obtained as a result of the drawing process.

Moreover, the average length of the resulting composite fibers is preferably 0.1 to 500 mm, more preferably 0.1 to 7 mm, and the average diameter is preferably 0.001 to 2 mm, more preferably 0.005 to 0.5 mm. When the average length and average diameter are within the above ranges, the composite fibers are less likely to become excessively entangled with each other and are less likely to hinder good dispersibility. Furthermore, the aspect ratio is preferably 10 to 4,000, more preferably 50 to 2,000. The aspect ratio refers to the ratio of the long axis to the short axis of the composite fibers.

Moreover, in the cross-section perpendicular to the long axis direction, the ratio of the length A of the cross-section in the long axis direction to the length B of the cross-section in the short axis direction perpendicular to the long axis direction (A/B) of the resulting composite fibers is preferably greater than 1, more preferably 1.5 or more, even more preferably 1.8 or more, and particularly preferably 2.0 or more. Moreover, the ratio A/B is preferably 20 or less, more preferably 15 or less, and particularly more preferably 10 or less. When the ratio is within the above range, the on-ice performance is further improved. The cross-sectional shape is not particularly limited as long as A/B is greater than 1 and may have any shape such as elliptical, rectangular, polygonal, or irregular shape.

Moreover, the content of the composite fibers made of the hydrophilic resin with a coating layer formed thereon is preferably 0.1 to 100 parts by mass, more preferably 0.3 to 30 parts by mass, even more preferably 0.5 to 10 parts by mass, and still even more preferably 1 to 6 parts by mass per 100 parts by mass of the rubber component. If the content of the composite fibers made of the hydrophilic resin with a coating layer formed thereon is within the above range, it is possible to form cavities within the composite fibers to thereby exhibit good drainage performance while maintaining sufficient durability.

Furthermore, the content ratio of the composite fibers to the space-introducing agent is not particularly limited, but from the viewpoint of achieving and improving both the wear resistance performance and on-ice performance, the mass ratio of the space-introducing agent to the composite fibers (space-introducing agen / composite fibers) is preferably 0.5 to 10, more preferably 1 to 8, even more preferably 1.5 to 7, and particularly more preferably 2 to 6.

### (Hydrogenated Resin)

The rubber composition for tires of the present disclosure preferably further contains a hydrogenated resin in addition to the above-mentioned rubber component, fatty acid amide, and liquid polymer, and filler, space-introducing agent, foaming aid, and composite fibers as suitable components.

Since the hydrogenated resin is easily miscible with the rubber component, it can impart the flexibility to the tire required for grip performance on wet and icy and/or snowy surfaces, thereby improving the grip performance, i.e., on-ice performance, on icy and/or snowy surfaces.

Here, the hydrogenated resin refers to a resin obtained by hydrogenating a resin. Examples of the resin that serves as the raw material for the hydrogenated resin include C₅-based resins, C₅/C₉-based resins, C₉-based resins, terpene-based resins, dicyclopentadiene-based resins, and terpene-aromatic compound-based resins, and these resins can be used alone or in combination.

Examples of the C₅-based resins include, for example, aliphatic petroleum resins obtained by (co)polymerizing the C₅ fraction obtained by thermal cracking of naphtha in the petrochemical industry.

The C₅ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercially available products can be used as the C₅-based resin.

The C₅/C₉-based resins refer to C₅/C₉-based synthetic petroleum resins. Examples of these C₅/C₉-based resins include solid polymers obtained by polymerizing a petroleum-derived C₅/C₁₁ fraction using a Friedel-Crafts catalyst such as AlCl₃ or BF₃. More specifically, examples include a copolymer having, as the main components, styrene, vinyltoluene, α-methylstyrene, indene, and the like.

As the C₅/C₉-based resin, a resin with little C₉ or higher component is preferable in terms of compatibility with the rubber component. Here, including "little C₉ or higher component" means that the amount of C₉ or higher component in the total amount of the resin is less than 50 mass%, preferably 40 mass% or less. A commercially available product can be used as the C₅/C₉-based resin.

The "C₉-based resins" refer to C₉-based synthetic petroleum resins, such as a solid polymer obtained by polymerizing a C₉ fraction using a Friedel-Crafts catalyst such as AlCl₃ or BF₃.

Examples of the C₉-based resin include a copolymer including indene, α-methylstyrene, vinyltoluene, and the like as main components.

The aforementioned terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resins include β-pinene resins and α-pinene resins. A typical example of the terpene-aromatic compound-based resin is a terpene-phenol resin. The terpene-phenol resin may be obtained by reacting terpenes and various phenols using a Friedel-Crafts catalyst or by further condensing the resultant with formalin. The terpenoid as raw material is not limited. The terpenoid is preferably monoterpene hydrocarbon such as α-pinene or limonene, more preferably contains α-pinene, and is particularly preferably α-pinene.

The aforementioned dicyclopentadiene-based resin refers to, for example, resins obtained by polymerizing dicyclopentadiene using a Friedel-Crafts catalyst, such as AlCl₃ or BF₃, or the like.

Moreover, the resin serving as the raw material for the hydrogenated resin may include, for example, a resin obtained by copolymerizing a C₅ fraction and dicyclopentadiene (DCPD) (C₅-DCPD-based resin).

Here, if the dicyclopentadiene-derived component accounts for 50 mass% or more of the total amount of the resin, the C₅-DCPD-based resin is classified as a dicyclopentadiene-based resin. If the dicyclopentadiene-derived component accounts for less than 50 mass% of the total amount of the resin, the C₅-DCPD-based resin is classified as a C₅-based resin. The same applies even if a small amount of a third component is included.

From the viewpoint of improving compatibility between the rubber component and the hydrogenated resin and further improving on-snow performance of the tire, the hydrogenated resin is preferably at least one selected from the group consisting of hydrogenated C₅-based resins, hydrogenated C₅/C₉-based resins, and hydrogenated dicyclopentadiene-based resins (hydrogenated DCPD-based resins), more preferably at least one selected from the group consisting of hydrogenated C₅-based resins and hydrogenated C₅/C₉-based resins, and even more preferably a hydrogenated C₅-based resin. Furthermore, it is preferable that the resin has a DCPD structure or a hydrogenated cyclic structure in at least monomers.

Moreover, the softening point of the hydrogenated resin is preferably higher than 110 °C. This is because if the softening point of the hydrogenated resin exceeds 110 °C, the rolling resistance of the tire can be sufficiently reduced. From the viewpoint of further lowering the rolling resistance of the tire, the softening point of the hydrogenated resin is preferably 115 °C or higher, more preferably 118 °C or higher, even more preferably 123 °C or higher, and still even more preferably 125 °C or higher. Additionally, from the viewpoint of further improving the wet grip performance and on-snow performance of the tire, the softening point of the hydrogenated resin is preferably 145 °C or lower, more preferably 138 °C or lower, and even more preferably 133 °C or lower.

Moreover, the polystyrene-equivalent weight average molecular weight of the hydrogenated resin is preferably from 200 to 1200 g/mol. This is because, when the polystyrene-equivalent weight average molecular weight of the hydrogenated resin is 200 g/mol or more, the precipitation of the hydrogenated resin from the tire can be suppressed, and when it is 1200 g/mol or less, the hydrogenated resin can be reliably miscible with the rubber component.

From the viewpoint of suppressing the precipitation of the hydrogenated resin from the tire and preventing a decline in the appearance of the tire, the polystyrene-equivalent weight average molecular weight of the hydrogenated resin is preferably 500 g/mol or more, more preferably 550 g/mol or more, even more preferably 620 g/mol or more, even more preferably 670 g/mol or more, even more preferably 720 g/mol or more, even more preferably 750 g/mol or more, and further preferably 780 g/mol or more. Furthermore, from the viewpoint of improving the compatibility of the hydrogenated resin with the rubber component and further enhancing the effect of the hydrogenated resin, the polystyrene-equivalent weight average molecular weight of the hydrogenated resin is preferably 1300 g/mol or less, more preferably 1100 g/mol or less, more preferably 1050 g/mol or less, more preferably 950 g/mol or less, more preferably 900 g/mol or less, and further preferably 850 g/mol or less.

Furthermore, it is preferable that the ratio of the softening point (Ts_{HR}) of the hydrogenated resin (unit: °C) to the polystyrene-equivalent weight average molecular weight (Mw_{HR}) of the hydrogenated resin (unit: g/mol) is 0.15 or more [0.15 ≤ (Ts_{HR}/Mw_{HR}).

From the viewpoint of further improving the wet grip performance and on-snow performance of the tire, the ratio (Ts_{HR}/Mw_{HR}) is preferably 0.155 or more, more preferably 0.158 or more, more preferably 0.160 or more, and further preferably 0.162 or more. Furthermore, from the viewpoint of suppressing the reduction in performance of the tire, it is preferably 0.2 or less, more preferably 0.185 or less, more preferably 0.178 or less, more preferably 0.172 or less, more preferably 0.168 or less, and further preferably 0.163 or less.

Preferably, the content of the hydrogenated resin in the rubber composition for tires of the present disclosure is 5 to 50 parts by mass per 100 parts by mass of the rubber component. When the content of the hydrogenated resin is 5 parts by mass or more per 100 parts by mass of the rubber component, it is possible to sufficiently manifest the effect by the hydrogenated resin. On the other hand, when it is 50 parts by mass or less per 100 parts by mass of the rubber component, it is possible to suppress the precipitation of the hydrogenated resin from the tire.

Furthermore, from the viewpoint of further enhancing the effect of the hydrogenated resin, the content of the hydrogenated resin in the rubber composition for tires is preferably 7 parts by mass or more, and more preferably 9 parts by mass or more per 100 parts by mass of the rubber component. Additionally, from the viewpoint of suppressing the precipitation of the hydrogenated resin from the tire and preventing a decline in the appearance of the tire, the content of the hydrogenated resin in the rubber composition for tires is preferably 40 parts by mass or less, more preferably 30 parts by mass or less, more preferably 25 parts by mass or less, and even more preferably 20 parts by mass or less, per 100 parts by mass of the rubber component.

### (Hydrocarbyl Group-Containing Cyclic Polyol Compound)

Furthermore, the rubber composition for tires of the present disclosure preferably further contains a hydrocarbyl group-containing cyclic polyol compound in addition to the above-mentioned rubber component, fatty acid amide, and liquid polymer, and filler, space-introducing agent, foaming aid, composite fibers, and hydrogenated resin as suitable components.

The hydrocarbyl group-containing cyclic polyol compound contained in the rubber composition for tires of the present disclosure can greatly improve the wear resistance performance and cut resistance of the rubber composition for tires. Moreover, by enhancing the interaction between the rubber molecules of the rubber component and the agent described later, it can homogenize the physical properties of the rubber after crosslinking, thereby improving reinforcing characteristic.

Additionally, it has been revealed that the rubber composition containing spaces of the present disclosure has further improved wear resistance performance and cut resistance.

Furthermore, since the hydrocarbyl group-containing cyclic polyol compound has fewer hydrophilic sites compared to compounds such as sorbitol, it can also suppress self-aggregation in the rubber composition, resulting in better maintenance of elongation fatigue resistance in the vulcanized rubber composition.

Here, the content of the hydrocarbyl group-containing cyclic polyol compound is preferably 0.1 to 5 parts by mass per 100 parts by mass of the natural rubber. When the content of the hydrocarbyl group-containing cyclic polyol compound is 0.1 parts by mass or more per 100 parts by mass of the natural rubber, sufficient effect of improving wear resistance performance can be achieved. On the other hand, when the content of the hydrocarbyl group-containing cyclic polyol compound is 5 parts by mass or less per 100 parts by mass of the natural rubber, self-aggregation in the rubber composition can be reliably suppressed and the elongation fatigue resistance can be further improved.

From a similar viewpoint, the content of the hydrocarbyl group-containing cyclic polyol compound is preferably 0.1 to 3 parts by mass, more preferably 0.3 to 2.5 parts by mass per 100 parts by mass of the natural rubber.

Moreover, from the viewpoint of improving wear resistance performance and cut resistance, it is preferable that the hydrocarbyl group-containing cyclic polyol compound is dispersed in the rubber component, and it is more preferable that it is dispersed in the natural rubber.

The hydrocarbyl group-containing cyclic polyol compound does not act as a surfactant for other components, but rather it is dispersed in the rubber to improve wear resistance performance and cut resistance and is thus distinct from surfactants.

Here, the hydrocarbyl group-containing cyclic polyol compound contains preferably two or more hydroxyl groups, and more preferably three or more hydroxyl groups. This is because having a number of hydroxyl groups enhances the interaction between the rubber component and additives, achieving better wear resistance performance and cut resistance. On the other hand, from the viewpoint of suppressing self-aggregation in the rubber due to the increase in hydrophilic sites, the compound contains preferably five or fewer hydroxyl groups, and more preferably four or fewer hydroxyl groups.

Furthermore, it is preferable that the hydrocarbyl group-containing cyclic polyol compound is a cyclic polyol compound with a hydrocarbyl ester group. This is because it enables the realization of superior wear resistance performance and cut resistance.

Moreover, from the viewpoint of achieving superior wear resistance performance and cut resistance, the hydrocarbyl group-containing cyclic polyol compound is more preferably a compound represented by the following formula (1):

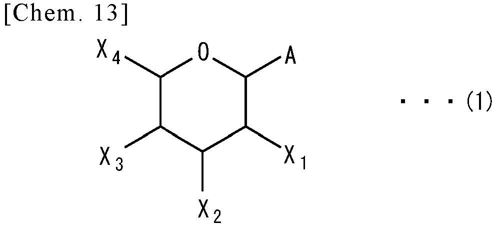

In the above formula (1), it is preferable that A represents a hydrocarbyl ester group having 6 to 30 carbon atoms or a hydrocarbyl ether group having 6 to 30 carbon atoms, and the hydrocarbyl group moiety of A has 12 to 24 carbon atoms. When the hydrocarbyl group moiety of A in the formula (A) has 12 to 24 carbon atoms, the wear resistance performance and cut resistance are further improved while good elongation fatigue resistance is maintained.

It is preferable that in formula (1), the first atom from the ring moiety (i.e., the atom bonded to the ring) or the second atom from the ring moiety is an oxygen atom. Examples of A where the first atom from the ring moiety is an oxygen atom include groups represented by -O-A' or -O-CO-A", and examples of A where the second atom from the ring moiety is an oxygen atom include groups represented by -CH₂-O-A" or -CH₂-O-CO-A"', where it is preferable that A' is a hydrocarbyl group having 6 to 30 carbon atoms, A" is a hydrocarbyl group having 5 to 29 carbon atoms, and A"' is a hydrocarbyl group having 4 to 28 carbon atoms, and it is more preferable that A', A", and A"' are hydrocarbyl groups having 12 to 24 carbon atoms.

In the above formula (1), X₁, X₂, X₃, and X₄ are each independently - OH or -R (where R is -H or -CH₂OH), with at least two of X₁, X₂, X₃, and X₄ being -OH. When preferably two or more of X₁, X₂, X₃, and X₄, more preferably three or more of X₁, X₂, X₃, and X₄ are -OH, the wear resistance performance and cut resistance of the rubber composition for tires are further improved.

Furthermore, among the compounds represented by the above formula (1), compounds represented by the following formulae (2) or (3) are even more preferred, with compounds represented by formula (2) being particularly preferred.

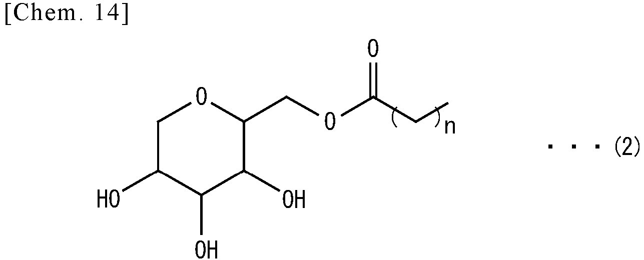

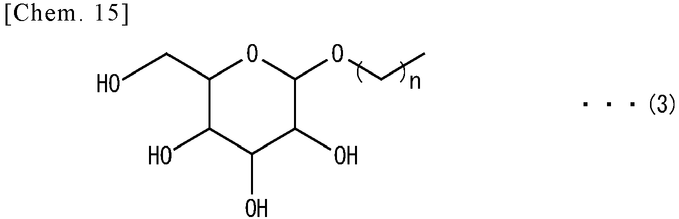

In formulae (2) and (3), n is a natural number and preferably ranges from 11 to 23.

By blending the compound represented by the above formula (2) or formula (3) as the modified cyclic polyol compound, the wear resistance performance can be further improved.

The hydrocarbyl group-containing cyclic polyol compound is not particularly limited but can be obtained, for example, by reacting polyol compounds such as sorbitol, sorbitan, glucose, or fructose, with aliphatic alcohols such as octanol, decanol, dodecanol, tetradecanol, or hexadecanol, or aliphatic carboxylic acids such as lauric acid, myristic acid, palmitic acid, stearic acid, or oleic acid.

Specifically, examples of the hydrocarbyl group-containing cyclic polyol compound include ester compounds such as sorbitan monolaurate, sorbitan monomyristate, sorbitan monopalmitate, sorbitan monostearate, or sorbitan monooleate, and ether compounds such as octyl-β-D-glucopyranoside, decyl-β-D-glucopyranoside, dodecyl-β-D-glucopyranoside, tetradecyl-β-D-glucopyranoside, or hexadecyl-β-D-glucopyranoside. These compounds may be used alone or in combination of two or more.

Among these compounds, from the viewpoint of balancing the elongation fatigue resistance and cut resistance at a higher level, it is preferable that the hydrocarbyl group-containing cyclic polyol compound is sorbitan monostearate (sorbitan monoester).

Furthermore, the melting point of the hydrocarbyl group-containing cyclic polyol compound is preferably 40 to 100 °C, more preferably 45 to 90 °C. This is because when the melting point of the hydrocarbyl group-containing cyclic polyol compound is 100 °C or lower, the solubility during kneading and vulcanization reactions can be improved, and when it is 40 °C or higher, cut resistance at high temperatures can be enhanced.

### (OtherComponents)

In addition to the aforementioned components, the rubber composition for tires of the present disclosure may also contain, as other components, components typically used in the rubber industry. For example, silane coupling agents, vulcanizing agents, vulcanization accelerators, polyethylene glycol, softeners, age-resistors, zinc oxide, etc., may be selected and included as appropriate as other components within the range in which the object of the present disclosure is not hampered. Commercial products are suitable for use as these compounding agents.

Moreover, when silica is included as a filler as described above, it is preferable to further include a silane coupling agent. This is because it can further enhance the cut resistance, reinforcing characteristic, and low-loss properties provided by the silica. As the silane coupling agent, known agents can be appropriately selected and used.

Examples of the silane coupling agent include, for example, bis(3-triethoxysilylpropyl) polysulfide, bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl and tetrasulfide, dimethoxymethylsilylpropyl benzothiazolyl tetrasulfide. One kind of these silane coupling agents may be used alone, or two or more kinds may be used in combination.

Although the content of the silane coupling agent varies depending on the type of silane coupling agent, the content is preferably 0.2 or less, more preferably 0.1 or less, and even more preferably 0.09 or less, in terms of mass ratio relative to the content of silica. This is because by reducing the content of the silane coupling agent to 0.2 or less in terms of mass ratio relative to the content of silica, the cut resistance of the rubber composition for tires can be further improved.

The type of the vulcanization accelerator is not particularly limited and conventionally known ones can be used. Examples include a sulfenamide-based vulcanization accelerator such as CBS (N-cyclohexyl-2-benzothiazolesulfenamide), TBBS (N-t-butyl-2-benzothiazolesulfenamide), TBSI (N-t-butyl-2-benzothiazolesulfenimide); a guanidine-based vulcanization accelerator such as DPG (diphenylguanidine); a thiuram-based vulcanization accelerator such as tetraoctylthiuram disulfide, tetrabenzylthiuram disulfide; a vulcanization accelerator using zinc dialkyldithiophosphate; and the like. The content thereof is preferably less than the content of the sulfur and is more preferably about 1 to 10 parts by mass per 100 parts by mass of the rubber component.

Furthermore, to enhance the flexibility of the rubber and achieve better wet performance and on-ice performance, the rubber composition for tires of the present disclosure may also include a softener. The softener can be one that is conventionally known, and is not particularly limited. Examples include a petroleum softener such as an aroma oil, a paraffin oil, or a naphthene oil; and a plant-based softener such as a palm oil, a castor oil, a cottonseed oil, or a soybean oil. When used, one or two or more of these may be selected and used as appropriate. Note that the softener does not include the fatty acid amide mentioned above.

In the case of adding the softener, a softener that is liquid at a normal temperature of about 25 °C, such as petroleum softeners such as aromatic oil, paraffinic oil, and naphthenic oil, is preferably included in view of handling easiness, among the softeners described above.

The production method for the rubber composition for tires of the present disclosure is not limited. For example, it can be obtained by compounding and kneading the above-mentioned components using known methods.

### <Tire>

The tire of the present disclosure includes the rubber composition for tires of the present disclosure described above used in the tread portion. By applying the rubber composition for tires of the present disclosure to the tread portion, it is possible to achieve excellent wear resistance performance while maintaining good on-ice performance.

The tire of the present disclosure can be used, for example, as a tire for construction vehicles, a tire for trucks and buses, a tire for aircraft, and a tire for passenger cars, and is particularly preferably a tire for passenger cars or a tire for trucks and buses. This is because the vulcanized rubber composition used as the material of the tread portion is excellent in on-ice performance and wear resistance performance, making it highly beneficial when used as a tire for passenger cars a tire for or trucks and buses.

When the rubber composition for tires of the present disclosure is used in the tread portion, the structure described in the following publications can be adopted as the tread structure:
JP 2016-203842A, JP 2009-196527A, JP 2000-225815A, JP 2000-264019A, JP 2003-211921 A, and WO 2014/196409.

The tire of the present disclosure has no particular limitations other than using the aforementioned rubber composition for tires in the tread portion of the tire and can be manufactured according to conventional methods. As a gas with which the tire is filled, an inert gas such as nitrogen, argon, or helium can be used as well as normal air or air whose oxygen partial pressure has been adjusted.

### EXAMPLES

The present disclosure is described in more detail below with reference to Examples, by which the present disclosure is not intended to be limited in any way.

### (Examples 1 and 2 and Comparative Example 1)

Samples of the rubber composition for tires were prepared by compounding and kneading according to the formulations summarized in Table 1 by a conventional method.

The obtained samples were subjected to vulcanization treatment to produce samples of the vulcanized rubber composition, and the following evaluations (1) to (3) were conducted.

### <Evaluations>

### (1) Foaming Ratio (Porosity) of Vulcanized Rubber

Each sample of the vulcanized rubber composition was cut at arbitrary points, and the weight of each sample was measured using a precision balance. The difference from the theoretical weight was calculated as the foaming ratio (porosity) (%) by the formula: ((theoretical specific gravity/measured specific gravity - 1) × 100). The obtained foaming ratios are summarized in Table 1.

### (2) On-ice Performance of Vulcanized Rubber

Each sample of the vulcanized rubber composition was molded into a test piece with a diameter of 50 mm and a thickness of 10 mm, the friction force generated when pressed against and rotated on a fixed ice surface was detected by a load cell, and the dynamic friction coefficient µ was calculated. The measurement temperature was -2 °C, the surface pressure was 12 kgf/cm², and the sample rotation circumferential speed was 20 cm/sec.

Each evaluation is expressed in Table 1 as an index with the dynamic friction coefficient µ of Comparative Example 1 being 100. A larger index value represents a greater dynamic friction coefficient µ, which means that the sample is excellent in on-ice performance.

### (3) Wear Resistance of Vulcanized Rubber

The wear amount was measured according to Method B of the testing for sliding wear resistance in JIS K 7218: 1986 for each sample of the vulcanized rubber composition. The measurement temperature was room temperature (23 °C), and the load was 16 N.

Each evaluation is expressed in Table 1 as an index with the wear amount of the vulcanized rubber of Comparative Example 1 being 100. A larger index value represents a smaller wear amount, which means that the sample is excellent in wear resistance performance.

**[Table 1]**

| | | Comparativ e Example 1 | Example 1 | Example 2 |
|---|---|---|---|---|
| | Natural rubber | 50 | 50 | 50 |
| | Modified SBR *1 | 50 | 20 | 50 |
| | Butadiene rubber *2 | - | 30 | - |
| | Carbon black *3 | 35 | 35 | 35 |
| | Silica *4 | 35 | 35 | 35 |
| | Silane coupling agent *5 | 2.8 | 2.8 | 2.8 |
| Formulation | Liquid polymer *8 | 10 | 10 | 10 |
| | Fatty acid amide *9 | - | 2.5 | 2.5 |
| | Foaming agent *6 | 4.5 | 4.5 | 4.5 |
| | Short fibers *7 | 2.0 | 2.0 | 2.0 |
| | Age resistor | 2.0 | 2.0 | 2.0 |
| | Sulfur | 1.0 | 1.0 | 1.0 |
| | Vulcanization accelerator | Total 2 | Total 2 | Total 2 |
| Evaluation | Foaming ratio | 23% | 19% | 26% |
| | On-ice performance | 100 | 116 | 109 |
| | Wear resistance | 100 | 84 | 89 |

| | | | | |
|---|---|---|---|---|
| *1 modified styrene butadiene rubber: N,N-bis-(trimethylsilyl)-aminopropylmethyldiethoxysilane-modified SBR *2 butadiene rubber: "UBEPOL BR150L", manufactured by Ube Industries, Ltd. *3 carbon black: SAF grade carbon black *4 silica: trade name "Nipseal AQ", manufactured by Tosoh Silica Corporation *5 silane coupling agent: bis(3-triethoxysilylpropyl) polysulfide, manufactured by Shin-Etsu Chemical Co., Ltd. *6 foaming agent: dinonitrosopentamethylenetetramine, "Cellular Z-K", manufactured by Eiwa Chemical Co., Ltd. *7 short fibers: hydrophilic short fibers produced by the following method. | | | | |

In accordance with Production Example 3 disclosed in JP 2012-219245 A, two twin-screw extruders were used, where 40 parts by mass of polyethylene [Novatec HJ360, manufactured by Japan Polyethylene Corporation (MFR: 5.5, melting point: 132 °C)] and 40 parts by mass of an ethylene-vinyl alcohol copolymer [EVAL F104B manufactured by Kuraray Co., Ltd. (MFR: 4.4, melting point: 183 °C)] were fed into hoppers and extruded simultaneously from the die outlets. Fibers obtained according to a conventional method were cut into a length of 2 mm to produce hydrophilic short fibers in which a coating layer made of polyethylene was formed on the surface of a core made of the ethylene-vinyl alcohol copolymer.
*8 liquid polymer: liquid polybutadiene with a molecular weight of 7000 and a vinyl content of 49%.
*9 fatty acid amide: "Alflo AD-281F", manufactured by NOF Corporation

Resins, oils, stearic acid, and zinc oxide were included in the same amounts in each example and comparative example, besides the compounding ingredients described in Table 1.

It can be understood from the results in Table 1 that the vulcanized rubber compositions in each example all achieved both wear resistance performance and on-ice performance at a higher level compared to Comparative Example 1.

### INDUSTRIAL APPLICABILITY

According to the present disclosure, a vulcanized rubber composition with excellent on-ice performance can be provided. In addition, according to the present disclosure, a tire with excellent on-ice performance can be provided.

## Claims

1. A rubber composition for tires comprising:
a rubber component;
a fatty acid amide; and
a liquid polymer with a polystyrene-equivalent weight average molecular weight measured by gel permeation chromatography of 5,000 or more and less than 40,000.

2. The rubber composition for tires according to claim 1, 0.1 to 10 parts by mass of the fatty acid amide is contained per 100 parts by mass of the rubber component.

3. The rubber composition for tires according to claim 1 or 2, wherein the fatty acid amide is a fatty acid bisamide.

4. The rubber composition for tires according to claim 3, wherein the fatty acid bisamide is an ethylene bis fatty acid amide.

5. The rubber composition for tires according to claim 1 or 2, wherein the liquid polymer is an unmodified conjugated diene-based polymer with a styrene content of less than 10% and a vinyl bond content in a conjugated diene compound moiety of 20% or more.

6. The rubber composition for tires according to claim 5, wherein the vinyl bond content in the conjugated diene compound moiety of the liquid polymer is 70% or less.

7. The rubber composition for tires according to claim 6, wherein the vinyl bond content in the conjugated diene compound moiety of the liquid polymer is 45% or more and 55% or less.

8. The rubber composition for tires according to claim 1 or 2, wherein the liquid polymer is an unmodified polybutadiene.

9. The rubber composition for tires according to claim 1 or 2, wherein a content of the liquid polymer is 1 to 40 parts by mass per 100 parts by mass of the rubber component.

10. The rubber composition for tires according to claim 9, wherein a mass ratio of the content of the liquid polymer to a content of the fatty acid amide (the content of the liquid polymer /the content of the fatty acid amide ) is 1 to 10.

11. The rubber composition for tires according to claim 1 or 2, wherein the rubber component contains natural rubber.

12. The rubber composition for tires according to claim 1 or 2, wherein the rubber component contains a modified conjugated diene-based polymer with functional groups.

13. The rubber composition for tires according to claim 1 or 2, further comprising a space-introducing agent.

14. The rubber composition for tires according to claim 13, wherein the space-introducing agent is at least one selected from the group consisting of foaming agents, sulfuric acid metal salts, thermally expandable microcapsules, porous cellulose, and lignin derivatives.

15. The rubber composition for tires according to claim 1 or 2, wherein the rubber composition further comprises composite fibers.

16. The rubber composition for tires according to claim 1 or 2, wherein a vulcanized rubber composition obtained by vulcanizing the rubber composition has spaces, and a porosity of the vulcanized rubber composition is 5 to 45%.

17. A tire comprising the rubber composition according to claim 1 or 2 used in a tread.
